# EUROPEAN PATENT SPECIFICATION

(11) **EP 4 175 479 B1**
(45) Date of publication and mention of the grant of the patent: **20.08.2025**
(21) Application number: 21734867.1
(22) Date of filing: 30.06.2021
(51) Int. Cl.: A23C 9/16, A23L 33/19, A23C 9/20, A23L 33/00

(54) **PROCESS FOR THE PREPARATION OF A POWDERY COMPOSITION COMPRISING BIOACTIVE MOLECULES**
VERFAHREN ZUR HERSTELLUNG EINER PULVERFÖRMIGEN ZUSAMMENSETZUNG ENTHALTEND BIOAKTIVEN MOLEKÜLEN
PROCÉDÉ DE PRÉPARATION D'UNE COMPOSITION PULVÉRULENTE COMPRENANT DES MOLÉCULES BIOACTIVES

(30) Priority: 01.07.2020 EP 20183450
(43) Date of publication of application: 10.05.2023
(73) Proprietor: FrieslandCampina Nederland B.V., 3818 LE Amersfoort (NL)
(72) Inventor: SCHUTEN, Henricus Johannes, 6708 WH Wageningen (NL); WILLEMS, Wilbert, 6708 WH Wageningen (NL); EBBEKINK, Jan Herman, 6708 WH Wageningen (NL)
(74) Representative: FrieslandCampina IP Department
(86) International application number: PCT/EP2021/067938
(87) International publication number: WO 2022/002995

(56) References cited:
- WO-A1-2013/007620
- WO-A1-2019/045576
- WO-A1-2020/002426
- CN-A- 105 994 651
- CN-A- 111 528 284
- US-A1- 2019 000 128

## Description

Microbiological safety is an important requirement for food products. Conventional production and preservation processes ensure the microbiological safety, but the taste and the nutritional content are often negatively influenced by these processes. Hence, there is a continuing need for preservation processes that minimize the impact on the food's nutritional value and taste. In addition, the processes should be environmentally and economically acceptable.

Dairy products contain bioactive molecules with health promoting properties. Conventionally, the microbiological safety of dairy products such as milk is warranted by thermal pasteurization or ultra-high heat treatment (UHT). Both processes, however, result in a substantial degradation of said bioactive molecules, such as heat-sensitive vitamins and proteins.

Several dairy products are sold in powder form, obtained by spray-drying. In order to ensure microbiological safety and extended shelf life, a pasteurization step is conventionally applied before spay-drying. This spray-drying process thus involves pre-heating of the product in a pasteurizer under pasteurization conditions (at least 72°C for at least 15 seconds), transporting the pasteurized product via a tower feeding line to the top of the spray-drying tower, and atomizing the liquid in the spray-dryer. Atomization is generally performed by a rotating disc or via nozzles. During transport to the top of the spray-drier, the product is not actively cooled and thus stays around 72°C. Cooling would negatively impact the capacity and energy input of the spray-drying process and would negatively affect the size of the spray-dried particles. In practice, this means that the product is at a temperature of at least 72°C for a period of about a minute. Denaturation of most bioactive proteins, however, starts above 65°C, meaning that the nutritional value of the product will be negatively affected by this process.

The object of the present invention is to provide a process for the preparation of a microbiological safe powder comprising bioactive molecules naturally occurring in milk, via spray-drying, wherein denaturation of (health-promoting) bioactive molecules is minimized. In other words: the object is to provide a process wherein the time period during which the product is above the denaturation temperature of said bioactive molecules is minimized.

This object has been met by the process according to the present invention, which comprises the steps of:
a. providing a liquid composition comprising bioactive molecules,
b. optionally pre-heating said liquid composition, provided that the temperature of the liquid composition does not exceed 65°C,
c. transporting the optionally pre-heated liquid composition to the top of a spray drying tower via a tower feeding line,
d. raising the temperature of the optionally pre-heated liquid composition at the top of the spray-drying tower using a direct electric volumetric heater located within the tower feeding line in a vicinity of the atomizer of the spray-dryer that allows the liquid composition to move from the heater to the atomizer within less than 40 seconds, the final temperature of the liquid composition being in the range 60-80°C, followed by
e. transporting the resulting liquid composition via the tower feeding line to the atomizer of a spray-dryer.

This process involves the treatment of a liquid composition comprising bioactive molecules. Preferably, said bioactive molecules are bioactive molecules naturally occurring in milk.

In this specification, the term "milk" refers to milk obtained from cattle (e.g. cows, buffalos, sheep, goats, horses, and camels), but also to human milk. Hence, the "bioactive molecules that are naturally present in milk" include bioactive molecules that are naturally present in human milk and/or in milk from cattle, such as cows.

The liquid composition comprises at least one type of bioactive molecule, meaning that the liquid composition may contain other components. The bioactive molecule naturally occurring in milk that is actually present in the composition may indeed find its origin in milk, but may also have been synthetically produced or obtained from natural sources other than milk.

Examples of bioactive molecules naturally occurring in milk include various proteins, lipids, vitamins, sialic acid, nucleotides, oligosaccharides, amino acids, and taurine.

In a preferred embodiment, the liquid composition comprises proteins naturally occurring in milk. Examples of such proteins are antimicrobial factors, immunoglobulin factors, cytokines, pro-/anti-inflammatory factors, chemokines, digestive enzymes, protein hormones, transporters, glycomacropeptides, α-lactalbumin, β-lactoglobulin, bovine serum albumin, and proteins of the milk fat globule membrane. Examples of antimicrobial factors are immunoglobulins, lactoferrin, lysozyme, and antimicrobial peptides such as β-defensins and complement C3. Immunoglobulins may comprise one or more selected from IgA, IgE, IgG, IgM, and IgD. In a preferred embodiment, the liquid composition comprises IgA and/or IgG in one or more subtypes thereof.

The liquid composition may comprise, consist essentially of, or consist of whole milk, semi-skimmed milk, skimmed milk, colostrum, reduced fat milk, low fat milk, fat-free milk, casein, sweet whey, and/or acid whey.

The liquid composition is optionally pre-heated to a temperature in the range 40-65°C, preferably 50-65°C, most preferably 55-65°C, which is below the denaturation temperature of most (health promoting) bioactive molecules. Pre-heating should not result in temperatures exceeding 65°C.

This pre-heating serves to lower the electric energy input during the subsequent steps and thus to make the process more energy-efficient.

This pre-heating can be performed batch-wise or continuously in any suitable equipment. Batch-wise pre-heating can be performed in a vessel; continuous pre-heating can be performed using a heat exchanger (e.g a plate heat exchanger). The pre-heating is preferably performed continuously.

After reaching the desired pre-heating temperature, the pre-heated liquid composition is transported to the top of a spray drying tower. There is no need for holding the composition at the desired temperature for a certain time period before conducting said transport. Therefore, the entire process can be performed in a continuous manner.

If not pre-heated, the liquid composition is preferably held below 20°C, more preferably below 15°C, and most preferably below 10°C until reaching the top of the spay-drying tower.

The tower feeding line can be a high-pressure line or can work under regular process pressure, depending on the type of spray-dryer. If the atomizer of the spray-dryer contains spraying nozzles, the pressure in said line is preferably set in the range 50-350 MPa. A rotating disc atomizer requires pressures in the range 1-5 MPa.

At the top of the spray-drying tower, the (pre-heated) liquid composition is heated using a direct electric volumetric heater that is located within the tower feeding line. During this step, the liquid composition is raised in temperature. In other words: the (pre-heated) liquid composition entering the direct electric volumetric heater with temperature T1 will leave the direct volumetric heater with a temperature T2, wherein T2>T1. Preferably, the difference in temperature of the liquid composition before entering and after leaving the direct electric volumetric heater (i.e. T2-T1) is at least 5°C, preferably at least 10°C, even more preferably at least 20°C, and most preferably at least 30°C. The temperature of the liquid composition after heating in the direct volumetric heater is preferably in the range 60-90°C, more preferably 60-80°C, and most preferably 70-75°C.

The top of the spray-drying tower is defined as a location in the vicinity of the atomizer (e.g. spraying nozzles or a rotating disc), such that the liquid composition can move from the heater to the atomizer within a short time frame, preferably less than about 40 seconds. In contrast to the use of heat-exchangers, the use of a direct volumetric heater allows very quick heating, even of high viscosity materials like infant formula.

The direct electric volumetric heater preferably operates by dielectric heating, ohmic heating (also referred to as joules heating or resistive heating), or pulsed electric field (PEF) heating.

Dielectric heating can be performed by microwave or by radio frequency heating, with frequencies of 13.56 MHz, 27.12 MHz or 40.68 MHz for radio frequency heating and 915 MHz or 2450 MHz for microwave heating. With radiofrequency heating, the heating is caused by the movement of salt ions in the solution; with microwave heating, the heating is caused by movement of both salt ions and water molecules.

Ohmic heating and PEF heating are caused by the electric resistivity of the fluid. An electric current is passed through the product and the resistance causes the product to heat up. This can be done with a direct current, an alternating current, or a pulsed current.

The use of a PEF treatment for reducing the microbial load of dairy products is disclosed in WO 2013/007620. According to that prior art procedure, the dairy product is first heated to 20-45°C, preferably 30°C, followed by a PEF treatment. After PEF treatment, the product is said to have a temperature of 64°C or lower, most preferably 50°C or lower. Optionally, the composition could be guided to a spray drying tower. With the present invention - which requires the direct electric volumetric heater to be located within the tower feeding line - higher temperatures can be reached without increasing bioactive molecule denaturation, thereby improving microbial safety.

The heated liquid composition is then transported - via the tower feeding line - to the atomizer(s) - i.e. nozzles or spinning disc - of a spray-dryer and sprayed to form a powder.

Legal pasteurization requires the composition to be held at ≥72°C for at least 15 seconds for every part of the product, or equivalent as defined in the Pasteurized Milk Ordinance of the FDA. If legal pasteurization is indeed required during the process of the present invention, the residence time in the last part of the tower feeding line - i.e. between the direct electric volumetric heater and the atomizer - should be such that the time required for legal pasteurization (or equivalent) at the applied temperature is met.

In some cases legal pasteurization is not required. In these cases the direct volumetric heater can be placed at appropriate distance from the atomizer in order to achieve the desired temperature for energy efficient spray-drying and/or sufficient inactivation of micro-organisms and at the same time ensure minimum denaturation of bioactive molecules (e.g. proteins). The use of dielectric, ohmic, or PEF heating therefore allows the residence time in the last part of the tower feeding line - i.e. between the direct electric volumetric heater and the atomizer - to be less than 20 seconds, preferably less than 15 seconds, more preferably less than 10 seconds, even more preferably less than 5 seconds, even more preferably less than 2 seconds, and most preferably less than 1 second.

PEF treatment is the preferred manner of direct electric volumetric heating in step d.

Spray-drying is subsequently performed using hot air with a temperature in the range 140-300°C, preferably 150-260°C, and most preferably 170-210°C.

Any type of spray-dryer can be used, such as Single Stage, 2-Stage, Multi Stage and Filtermat^{®} type spray dryers.

Preferred powders that can be produced using the process of the present invention are powders containing dairy products, such as milk powder (e.g. whole milk powder, semi-skimmed milk powder, skimmed milk powder, colostrum powder, reduced fat milk powder, low fat milk powder, fat-free milk powder), casein powder, whey protein concentrate or whey protein isolate powders, serum protein concentrate or serum protein isolate powders, lactoferrin powder, nutritional compositions for infants young children, and base powders for such nutritional compositions.

But also oligosaccharides like human milk oligosaccharides, galacto-oligosaccharides, and fructo-oligosaccharides, vitamins like vitamin A or vitamin D, milk fat or milk fat-based products, phospholipids, poly-unsaturated fatty acids, and probiotics can be spray-dried with the process of the present invention.

### EXAMPLE

Raw milk was heated in 5 L stainless steel buckets in a water bath while agitating. The milk was heated to 45°C prior to homogenization. Homogenization was carried out at 170 bar (first stage) and 30 bars (second stage).

This raw milk was subjected to three different processes:
1. A process mimicking legal pasteurization (74°C for 20 seconds) before spray-drying, which involved heating the milk at 74°C for 20 seconds in a tubular heater, followed by transportation to a tubular cooler. Transportation took 31 seconds, a time representative for transportation from a pasteurizer to a spray-drying nozzle.
2. A process mimicking minimized legal pasteurization and spray-drying, which process involved heating the milk in a tubular heater to a temperature of 50°C, followed by transportation to a tubular cooler. Transportation took 31 seconds, but at residence time of 20 seconds before cooler, the temperature was boosted to 74 °C using a PEF electric heating device.
3. A process mimicking pasteurization and direct atomization, which process involved heating the milk to a temperature of 50°C in a tubular heater, transporting it to a tubular cooler in 31 seconds, and boosting the temperature just before the cooler to 74°C using a PEF electric heating device. In this process, there was no residence time prior to cooling.

The tubular heater was a double jacketed tube wound in a coil. The double jacket was flushed counter-currently with hot water to reach the desired temperature.

The PEF heating device contained ohmic heating cells with a 3 chamber design, 2x [1.8x10 mm] and 1x [1.8x20 mm], The field strength for electric heating was set at 300 V/cm. The pulse duration was gradually ramped up to 1000 µs; as soon as the pulse duration was reached the frequency was increased from 0 to 125 Hz in steps of ~20 Hz. From 100 Hz onwards small steps of ~5 Hz were used to prevent a temperature overshoot.

The tubular cooler was a wound double jacketed tube with ice water fed cocurrently in the outer tube.

The processes were run for 15 minutes, after which samples were collected. Fluid exiting the cooler was collected in sterile containers and stored on ice.

Native immunoglobulin levels (Active IgG, active IGA, and active IgM) and lactoferrin were determined by the bovine IgG, IgA, IgM and LF ELISA quantitation set as described by R.L. Valk-Weeber, T. Eshuis-de Ruiter, L. Dijkhuizen, and S.S. van Leeuwen, International Dairy Journal, Volume 110, November 2020, 104814).

| Sample | lactoferrin | | IgG | | IgA | | IgM | |
|---|---|---|---|---|---|---|---|---|
| | µg/ml | % | µg/ml | % | µg/ml | % | µg/ml | % |
| Raw milk | 75.6 | 100 | 299.3 | 100 | 32.7 | 100 | 67.6 | 100 |
| Process 1 | 38.2 | 50.4 | 166.9 | 21.3 | 8.0 | 24.2 | 14.5 | 21.3 |
| Process 2 | 52.9 | 70.0 | 225.7 | 75.4 | 17.5 | 53.5 | 39.6 | 58.6 |
| Process 3 | 66.5 | 88.0 | 259.6 | 86.7 | 28.4 | 86.5 | 62.8 | 92.8 |

This Table shows that the level of native immunoglobulins increases with decreasing heat load.

The effect of the spray-drying on the native Ig and lactoferrin levels was studied separately by feeding milk (inlet temperature: 50°C) to a pilot spray-dryer at a pressure of 50 bar, an air inlet temperature of 170°C, and an air outlet temperature of 80°C. No loss in active IgG, IgM, and lactoferrin was detected; and only a minor loss (about 5%) in active IgA was observed.

In other words, bioactivity loss during pasteurization and spray-drying is caused by the heat load prior to spray-drying. Reducing this heat load by conducting the process in accordance with the present invention maintains large amounts of bioactives.

## Claims

1. Process for the preparation of a powder comprising bioactive molecules, said process comprising the steps of:
a. providing a liquid composition comprising bioactive molecules,
b. optionally pre-heating said liquid composition, provided that the temperature of the liquid composition does not exceed 65°C,
c. transporting the optionally pre-heated liquid composition to the top of a spray drying tower via a tower feeding line,
d. raising the temperature of the optionally pre-heated liquid composition at the top of the spray drying tower using a direct electric volumetric heater located within the tower feeding line in a vicinity of the atomizer of the spray-dryer that allows the liquid composition to move from the heater to the atomizer within less than 40 seconds; the final temperature of the liquid composition being in the range 60-90°C, followed by
e. transporting the resulting liquid composition via the tower feeding line to the atomizer of a spray-dryer.

2. Process according to claim 1 wherein the bioactive molecules are bioactive molecules naturally occurring in milk.

3. Process according to claim 1 or 2 wherein the direct electric volumetric heater operates by dielectric heating, ohmic heating, or pulsed electric field.

4. Process according to claim 3 wherein the direct electric volumetric heater is a pulsed electric field (PEF) apparatus.

5. Process according to any one of the preceding claims wherein the residence time in the part of the tower feeding line between the direct electric volumetric heater and the atomizer is less than 20 seconds, preferably less than 15 seconds, more preferably less than 10 seconds, even more preferably less than 5 seconds, more preferably less than 2 seconds, and most preferably less than 1 second.

6. Process according to any one of the preceding claims wherein the bioactive molecules are proteins naturally occurring in milk.

7. Process according to claim 6 wherein said proteins are selected from the group consisting of antimicrobial factors, immunoglobulin factors, cytokines, pro-/anti-inflammatory factors, chemokines, digestive enzymes, protein hormones, transporters, glycomacropeptides, α-lactalbumin, β-lactoglobulin, bovine serum albumin, and proteins of the milk fat globule membrane.

8. Process according to claim 7 wherein said proteins are immunoglobulins, preferably selected from the group consisting of IgA, IgE, IgG, IgM, and IgD, more preferably selected from the group consisting of IgA and IgG.

9. Process according to any one of claims 2-8 wherein the liquid composition comprising bioactive molecules naturally occurring in milk comprises or consists of whole milk, semi-skimmed milk, skimmed milk, colostrum, reduced fat milk, low fat milk, fat-free milk, casein, sweet whey, and/or acid whey.

10. Process according to any one of the claims 2-9 wherein the powder comprising bioactive molecules naturally occurring in milk is a dairy product, preferably selected from the group consisting of milk powder - such as whole milk powder, semi-skimmed milk powder, skimmed milk powder, colostrum powder, reduced fat milk powder, low fat milk powder, and at-free milk powder - casein powder, whey protein concentrate powder whey protein isolate powder, serum protein concentrate powder, serum protein isolate powder, lactoferrin powder, powdered nutritional compositions for infants young children, and base powders for such nutritional compositions.

## Patentansprüche

1. Verfahren zur Herstellung eines Pulvers, das bioaktive Moleküle umfasst, wobei das Verfahren die Schritte umfasst:
a. Bereitstellen einer flüssigen Zusammensetzung, die bioaktive Moleküle umfasst,
b. gegebenenfalls Vorwärmen der flüssigen Zusammensetzung, mit der Maßgabe, dass die Temperatur der flüssigen Zusammensetzung 65 °C nicht übersteigt,
c. Befördern der gegebenenfalls vorgewärmten flüssigen Zusammensetzung über eine Turmbeschickungsleitung zu dem Kopf eines Sprühtrocknungsturms,
d. Erhöhen der Temperatur der gegebenenfalls vorgewärmten flüssigen Zusammensetzung an dem Kopf des Sprühtrocknungsturms unter Verwendung einer direkten elektrischen Volumenheizvorrichtung, die innerhalb der Turmbeschickungsleitung in der Nähe des Zerstäubers des Sprühtrockners angeordnet ist, wodurch der flüssigen Zusammensetzung ermöglicht wird, sich innerhalb von weniger als 40 Sekunden von der Heizvorrichtung zu dem Zerstäuber zu bewegen; wobei die Endtemperatur der flüssigen Zusammensetzung in dem Bereich von 60-90 °C liegt, gefolgt von
e. Befördern der erhaltenen flüssigen Zusammensetzung über die Turmbeschickungsleitung zu dem Zerstäuber eines Sprühtrockners.

2. Verfahren nach Anspruch 1, wobei die bioaktiven Moleküle natürlich in Milch vorkommende bioaktive Moleküle sind.

3. Verfahren nach Anspruch 1 oder 2, wobei die direkte elektrische Volumenheizvorrichtung durch dielektrische Erwärmung, ohmsche Erwärmung oder gepulstes elektrisches Feld arbeitet.

4. Verfahren nach Anspruch 3, wobei die direkte elektrische Volumenheizvorrichtung eine Vorrichtung mit gepulstem elektrischem Feld (PEF) ist.

5. Verfahren nach einem der vorstehenden Ansprüche, wobei die Verweilzeit in dem Teil der Turmbeschickungsleitung zwischen der direkten elektrischen Volumenheizvorrichtung und dem Zerstäuber weniger als 20 Sekunden, vorzugsweise weniger als 15 Sekunden, bevorzugter weniger als 10 Sekunden, noch bevorzugter weniger als 5 Sekunden, bevorzugter weniger als 2 Sekunden und höchst bevorzugt weniger als 1 Sekunde beträgt.

6. Verfahren nach einem der vorstehenden Ansprüche, wobei die bioaktiven Moleküle natürlich in Milch vorkommende Proteine sind.

7. Verfahren nach Anspruch 6, wobei die Proteine ausgewählt sind aus der Gruppe bestehend aus antimikrobiellen Faktoren, Immunglobulinfaktoren, Zytokinen, pro-/antiinflammatorischen Faktoren, Chemokinen, Verdauungsenzyme, Proteinhormonen, Transportern, Glycomakropeptiden, α-Lactalbumin, β-Lactoglobulin, Rinderserumalbumin und Proteinen der Milchfettkügelchenmembran.

8. Verfahren nach Anspruch 7, wobei die Proteine Immunglobuline sind, vorzugsweise ausgewählt aus der Gruppe bestehend aus IgA, IgE, IgG, IgM und IgD, bevorzugter ausgewählt aus der Gruppe bestehend aus IgA und IgG.

9. Verfahren nach einem der Ansprüche 2-8, wobei die flüssige Zusammensetzung, die natürlich in Milch vorkommende bioaktive Moleküle umfasst, Vollmilch, halbentrahmte Milch, entrahmte Milch, Kolostrum, fettreduzierte Milch, fettarme Milch, fettfreie Milch, Casein, Süßmolke und/oder Sauermolke umfasst oder daraus besteht.

10. Verfahren nach einem der Ansprüche 2-9, wobei das Pulver, das natürlich in Milch vorkommende bioaktive Moleküle umfasst, ein Milchprodukt ist, vorzugsweise ausgewählt aus der Gruppe bestehend aus Milchpulver - wie z.B. Vollmilchpulver, halbentrahmtes Milchpulver, entrahmtes Milchpulver, Kolostrumpulver, fettreduziertes Milchpulver, fettarmes Milchpulver und fettfreies Milchpulver - Caseinpulver, Molkeproteinkonzentratpulver Molkeproteinisolatpulver, Serumproteinkonzentratpulver, Serumproteinisolatpulver, Lactoferrinpulver, pulverförmige Nährstoffzusammensetzungen für Kleinkinder und Basispulver für derartige Nährstoffzusammensetzungen.

## Revendications

1. Procédé de préparation d'une poudre comprenant des molécules bioactives, ledit procédé comprenant les étapes de :
a. fourniture d'une composition liquide comprenant des molécules bioactives,
b. éventuellement préchauffage de ladite composition liquide, à condition que la température de la composition liquide ne dépasse pas 65 °C,
c. transport de la composition liquide éventuellement préchauffée jusqu'au sommet d'une tour de séchage par pulvérisation par l'intermédiaire d'une conduite d'alimentation de la tour,
d. augmentation de la température de la composition liquide éventuellement préchauffée au sommet de la tour de séchage par pulvérisation au moyen d'un dispositif de chauffage volumétrique électrique direct situé dans la conduite d'alimentation de la tour à proximité de l'atomiseur du séchoir par pulvérisation, ce qui permet à la composition liquide de se déplacer du dispositif de chauffage jusqu'à l'atomiseur en moins de 40 secondes ; la température finale de la composition liquide étant dans la plage 60-90 °C, suivie par le
e. transport de la composition liquide résultante par la conduite d'alimentation de la tour vers l'atomiseur d'un séchoir par pulvérisation.

2. Procédé selon la revendication 1, dans lequel les molécules bioactives sont des molécules bioactives présentes naturellement dans le lait.

3. Procédé selon la revendication 1 ou 2, dans lequel le dispositif de chauffage volumétrique électrique direct fonctionne par chauffage diélectrique, chauffage ohmique ou champ électrique pulsé.

4. Procédé selon la revendication 3, dans lequel le dispositif de chauffage volumétrique électrique direct est un appareil à champ électrique pulsé (PEF).

5. Procédé selon l'une quelconque des revendications précédentes, dans lequel le temps de séjour dans la partie de la conduite d'alimentation de la tour entre le dispositif de chauffage volumétrique électrique direct et l'atomiseur est inférieur à 20 secondes, de préférence inférieur à 15 secondes, plus préférablement inférieur à 10 secondes, encore plus préférablement inférieur à 5 secondes, plus préférablement inférieur à 2 secondes, et le plus préférablement inférieur à 1 seconde.

6. Procédé selon l'une quelconque des revendications précédentes, dans lequel les molécules bioactives sont des protéines présentes naturellement dans le lait.

7. Procédé selon la revendication 6, dans lequel lesdites protéines sont choisies dans le groupe constitué par des facteurs antimicrobiens, des facteurs d'immunoglobuline, des cytokines, des facteurs pro-/anti-inflammatoires, des chimiokines, des enzymes digestives, des hormones protéiques, des transporteurs, des glycomacropeptides, une α-lactalbumine, une β-lactoglobuline, une sérumalbumine bovine et des protéines de la membrane du globule gras du lait.

8. Procédé selon la revendication 7, dans lequel lesdites protéines sont des immunoglobulines, de préférence choisies dans le groupe constitué par IgA, IgE, IgG, IgM et IgD, plus préférablement choisies dans le groupe constitué par IgA et IgG.

9. Procédé selon l'une quelconque des revendications 2-8, dans lequel la composition liquide comprenant des molécules bioactives présentes naturellement dans le lait comprend ou est constituée par du lait entier, du lait demi-écrémé, du lait écrémé, du colostrum, du lait à teneur réduite en matières grasses, du lait à faible teneur en matières grasses, du lait sans matières grasses, de la caséine, du lactosérum doux et/ou du lactosérum acide.

10. Procédé selon l'une quelconque des revendications 2-9, dans lequel la poudre comprenant des molécules bioactives présentes naturellement dans le lait est un produit laitier, de préférence choisi dans le groupe constitué par la poudre de lait - telle que la poudre de lait entier, la poudre de lait demi-écrémé, la poudre de lait écrémé, la poudre de colostrum, la poudre de lait à teneur réduite en matières grasses, la poudre de lait à faible teneur en matières grasses et la poudre de lait sans matières grasses - la poudre de caséine, la poudre de concentré de protéines de lactosérum, la poudre d'isolat de protéines de lactosérum, la poudre de concentré de protéines de sérum, la poudre d'isolat de protéines de sérum, la poudre de lactoferrine, les compositions nutritionnelles en poudre pour nourrissons et enfants en bas âge, et les poudres de base pour de telles compositions nutritionnelles.
